# EUROPEAN PATENT SPECIFICATION

(11) **EP 3 013 015 B1**
(45) Date of publication and mention of the grant of the patent: **20.02.2019**
(21) Application number: 14819791.6
(22) Date of filing: 17.06.2014
(51) Int. Cl.: H04L 29/06, H04L 29/08

(54) **PACKET COMPRESSION METHOD AND APPARATUS**
PAKETKOMPRESSIONSVERFAHREN UND VORRICHTUNG
PROCÉDÉ ET APPAREIL DE COMPRESSION DE PAQUET

(30) Priority: 03.07.2013 CN 201310276319
(43) Date of publication of application: 27.04.2016
(73) Proprietor: Huawei Technologies Co., Ltd., Longgang District Shenzhen, Guangdong 518129 (CN)
(72) Inventor: ZHANG, Liang, Shenzhen Guangdong 518129 (CN); GUO, Kai, Shenzhen Guangdong 518129 (CN); GAO, Wei, Shenzhen Guangdong 518129 (CN); WU, Jun, Shenzhen Guangdong 518129 (CN)
(74) Representative: Goddar, Heinz J.
(86) International application number: PCT/CN2014/080097
(87) International publication number: WO 2015/000361

(56) References cited:
- CN-A- 101 159 667
- CN-A- 102 420 672
- CN-A- 102 474 753
- US-A1- 2002 058 501
- US-A1- 2007 002 855

## Description

### TECHNICAL FIELD

The present invention relates to the field of communications technologies, and in particular, to a packet compression method and apparatus.

### BACKGROUND

HTTP (Hypertext Transfer Protocol) is used to describe a process of how a Web client requests a Web page from a Web server and how the Web server sends the Web page to the Web client, and relevant messages.

Specifically, a basic process of an HTTP request and an HTTP response may include: when a user requests a Web page by clicking a hyperlink in a Web page or entering a website in a browser, the browser sends HTTP request messages of objects in the Web page to a Web server, and after receiving the Web requests, the Web server adds these objects in an HTTP response message as a response.

To adapt to continuously increasing network traffic, many devices save bandwidth by using various means. HTTP compression is a method for transmitting compressed data between a Web server and a browser. In the HTTP compression, files such as an HTML file, a JavaScript file, and a CSS file are usually compressed by using a gzip (the name of a compression method) compression algorithm. The biggest benefit of compression is that the volume of data transmitted in a network is reduced, and therefore, the rate of accessing a browser in a client is improved. Certainly, burden of a server is also increased meanwhile.

Specifically, a packet may include: a header and a body. In the prior art, dynamic compression is performed by using entire content of each packet; therefore, when there are two packets only slightly different in content, compression processing still needs to be performed separately on entire content of the two packets by using a compression algorithm, so that the efficiency is relatively low.

US 2007/002855 A1 discloses a method for compressing a signalling message in a compressor in a communication system. The compressor comprising a compression memory, wherein the compression memory comprises a first memory in a virtual machine and a second memory external to the virtual machine. The method comprising the steps of: receiving a part of the signalling message; searching the second memory for a copy of the received part of the signalling message; and determining a reference to the received part of the signalling message on the basis of the searching step; outputting the reference as a part of the compressed signalling message representing the received part of the signalling message.

US 2002/058501 A1 discloses a method, system, and apparatus for increasing the efficiency and robustness of the compression of messages using a communication protocol for communication between entities over bandwidth-limited communication links. In one aspect of the present invention, a dictionary compression method is used to compress and decompress messages between communication entities. Each communication entity includes a static dictionary, a dynamic dictionary, a Temporary Receiver Dictionary, and a Temporary Sender Table. During compression of messages, a compressor in each entity uses the static dictionary, the dynamic dictionary, and the Temporary Receiver Dictionary as compression dictionaries. During decompression of messages, a decompressor in each entity uses the static dictionary, the dynamic dictionary, and the Temporary Sender Table as decompression dictionaries.

### SUMMARY

The present invention provides a packet compression method and apparatus of claim 1 and 5, respectively. By using the foregoing solutions, only a changeable part of a to-be-compressed packet needs to be compressed, and compressed content of an unchangeable part can be acquired directly, thereby avoiding compression of the entire packet and improving the compression efficiency.

To achieve the foregoing objective, the following technical solutions are used in the embodiments of the present invention:
According to a first aspect, a packet compression method is provided, including:
receiving a to-be-compressed packet sent by a transmitting end;
acquiring first original content from an unchangeable part of the to-be-compressed packet wherein the unchangeable part comprises a name field, and acquiring second original content from a changeable part of the to-be-compressed packet wherein the changeable part comprises a value field that corresponds to the name field;
compressing the first original content by using a static dictionary to obtain first compressed content, and compressing the second original content by using a dynamic dictionary to obtain second compressed content; and
sending a compressed packet to a receiving end, where the compressed packet includes the first compressed content and the second compressed content.

The compressing the second original content by using a dynamic dictionary to obtain second compressed content includes:
determining whether the dynamic dictionary comprises compressed content corresponding to the second original content; and
if the dynamic dictionary does not includes compressed content corresponding to the second original content, compressing the second original content to obtain the second compressed content and storing the correspondence between the second original content and the second compressed content to the dynamic dictionary.

In a possible implementation manner, the to-be-compressed packet includes a header, where the header includes the name field and the value field corresponding to the name field.

In a possible implementation manner, the to-be-compressed packet further includes a body, and the second original content further includes the body.

In a possible implementation manner, the to-be-compressed packet is a Hypertext Transfer Protocol HTTP packet, a Real-Time Transport Protocol RTP packet, or a Real-Time Streaming Protocol RTSP packet.

According to a second aspect, a packet compression apparatus is provided, including:
a receiving unit, configured to receive a to-be-compressed packet sent by a transmitting end;
an acquiring unit, configured to acquire first original content from an unchangeable part of the to-be-compressed packet wherein the unchangeable part comprises a name field, and acquire second original content from a changeable part of the to-be-compressed packet wherein the changeable part comprises a value field that corresponds to the name field;
a compression unit, configured to compress the first original content by using a static dictionary to obtain first compressed content, and compress the second original content by using a dynamic dictionary to obtain second compressed content; and
a sending unit, configured to send a compressed packet to a receiving end, where the compressed packet includes the first compressed content and the second compressed content.

The compression unit further includes:
a determining module, configured to determine whether the dynamic dictionary includes compressed content corresponding to the second original content; and
a compression module, configured to: if the correspondence is not included, compress the second original content to obtain the second compressed content and store the correspondence between the second original content and the second compressed content to the dynamic dictionary.

In a possible implementation manner, the to-be-compressed packet received by the receiving unit includes a header, where the header includes the name field and the value field corresponding to the name field.

In a possible implementation manner, the to-be-compressed packet received by the receiving unit further includes a body, and the second original content further includes the body.

In a possible implementation manner, the to-be-compressed packet received by the receiving unit is a Hypertext Transfer Protocol HTTP packet, a Real-Time Transport Protocol RTP packet, or a Real-Time Streaming Protocol RTSP packet.

In the packet compression method and apparatus provided in the embodiments of the present invention, by using the foregoing solutions, a to-be-compressed packet sent by a transmitting end is received; the to-be-compressed packet is compressed according to changeability of content included in the to-be-compressed packet, to obtain a compressed packet; and the compressed packet is sent to a receiving end, so that the receiving end performs a corresponding operation according to the to-be-compressed packet. A changeable part and an unchangeable part of the to-be-compressed packet are compressed by using different compression methods separately. When there are two packets only slightly different in content, only the slightly different content needs to be compressed by using a dynamic dictionary, and compressed content of the same content can be obtained directly by using a static dictionary, thereby avoiding that compression processing is performed on the entire to-be-compressed packet by using a compression algorithm, and improving the compression efficiency.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an HTTP packet;
FIG. 2 is a flowchart of a packet compression method according to an embodiment;
FIG. 3 is a flowchart of another packet compression method according to an embodiment;
FIG. 4 is a flowchart of still another packet compression method according to an embodiment;
FIG. 5 is a schematic structural diagram of a scenario in which the method shown in FIG. 3 is applied;
FIG 6 is a schematic structural diagram of an encoder provided in the method shown in FIG. 3;
FIG. 7 is a schematic structural diagram of a decoder provided in the method shown in FIG. 3;
FIG. 8 is a schematic structural diagram of a packet compression apparatus according to an embodiment; and
FIG 9 is a schematic structural diagram of another packet compression apparatus according to an embodiment.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To describe the embodiments more clearly, the following briefly introduces an HTTP packet.

It should be noted that, both a to-be-compressed packet and a compressed packet provided in this embodiment may be a Hypertext Transfer Protocol HTTP packet, a Real-Time Transport Protocol RTP protocol, a Real-Time Streaming Protocol RTSP packet, or the like.

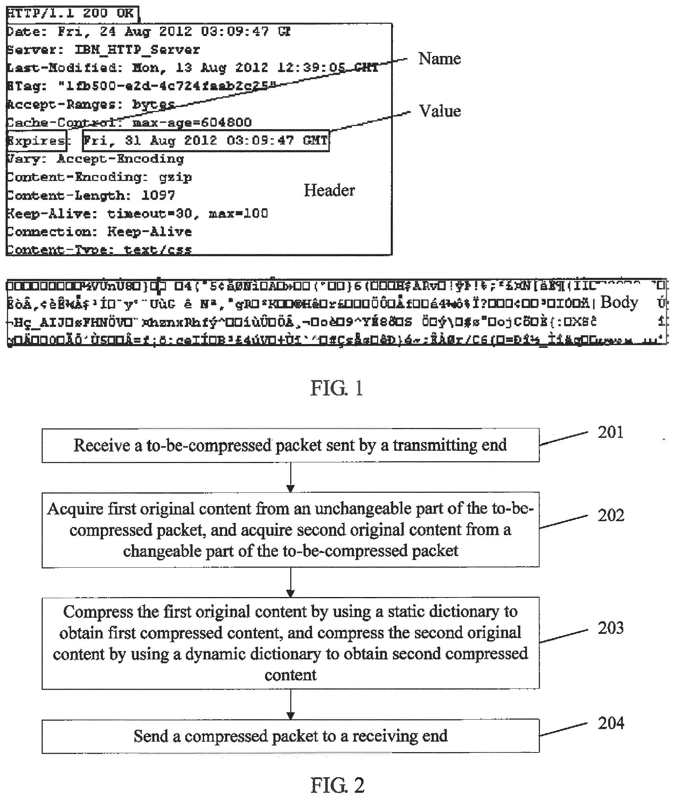

FIG. 1 shows a typical HTTP packet format, where the packet may include a Header and a Body. The Header describes the HTTP packet, and the Body is an object requested by an HTTP request, for example, a web page. In the Header, each line is divided by a colon into two domains: a name field and a value field. In FIG. 1, Expires is the name, and Fri, 31 Aug 2012 03:09:47 GMT is Value.

In the prior art, the Header and the Body are compressed together; however, because content of the Header always changes, if the Header and the Body are compressed together, each time the Header changes, the entire packet needs to be compressed again, and the complexity is relatively high.

To resolve the foregoing problem, an embodiment provides a packet compression method, and this embodiment may be executed by a packet compression apparatus. As shown in FIG. 2, the method may include:
201: Receive a to-be-compressed packet sent by a transmitting end.

To perform subsequent steps, before the to-be-compressed packet is compressed, the to-be-compressed packet is received first.

202: Acquire first original content from an unchangeable part of the to-be-compressed packet, and acquire second original content from a changeable part of the to-be-compressed packet.

203: Compress the first original content by using a static dictionary to obtain first compressed content, and compress the second original content by using a dynamic dictionary to obtain second compressed content.

Compressing the first original content by using the static dictionary actually refers to that: a correspondence, stored in the static dictionary, between the first original content and the first compressed content is searched according to the first original content to obtain the first compressed content, and no compression processing needs to be performed on the first original content by using a compression algorithm; therefore, the speed of acquiring the first compressed content is fast.

As an implementation manner of this embodiment, the to-be-compressed packet may be compressed according to changeability of content of the to-be-compressed packet, that is, the first original content and the second original content may be compressed in different compression manners, so that a better compression ratio of a compressed packet can be obtained.

204: Send a compressed packet to a receiving end.

The compressed packet may include the first compressed content and the second compressed content.

By using the foregoing solutions, a changeable part and an unchangeable part of the to-be-compressed packet are compressed by using different compression methods separately. When there are two packets only slightly different in content, only the slightly different content needs to be compressed by using a dynamic dictionary, and compressed content of the same content can be obtained directly by using a static dictionary, thereby avoiding that compression processing is performed on the entire to-be-compressed packet by using a compression algorithm, and improving the compression efficiency.

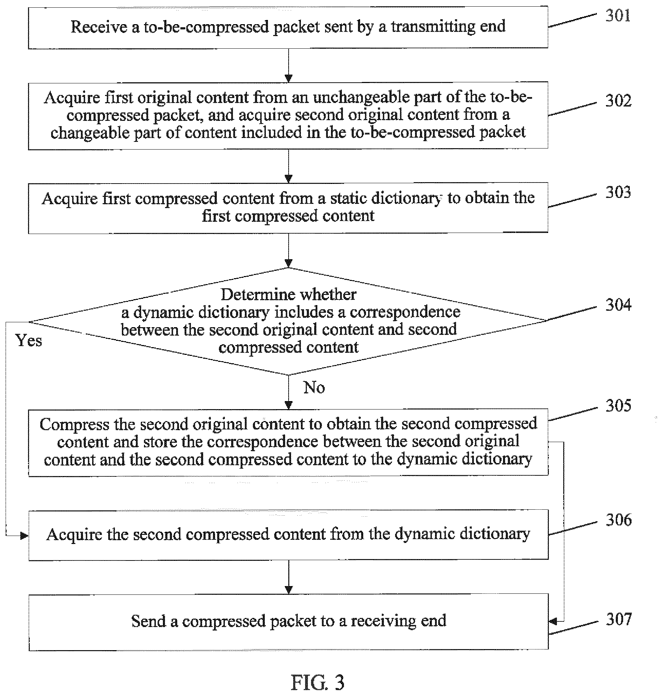

An embodiment provides another packet compression method, and the method is a further extension of the method shown in FIG. 2. As shown in FIG. 3, the method may include:
301: Receive a to-be-compressed packet sent by a transmitting end.

To save a transmission resource, the transmitting end sends a compressed packet to a receiving end, and to perform subsequent steps, a packet compression apparatus first receives the to-be-compressed packet sent by the transmitting end.

Further, the to-be-compressed packet may be a Hypertext Transfer Protocol HTTP packet, a Real-Time Transport Protocol RTP packet, a Real-Time Streaming Protocol RTSP packet, or the like.

302: Acquire first original content from an unchangeable part of the to-be-compressed packet, and acquire second original content from a changeable part of content included in the to-be-compressed packet.

Further, the to-be-compressed packet may include but is not limited to: a header; the header may include but is not limited to: a name field and a value field corresponding to the name field; and the first original content may include but is not limited to: content in the name field; and the second original content may include but is not limited to: content in the value field corresponding to the name field.

This embodiment does not limit the name field and the value field, which is a technique well known by a person skilled in the art, for example, in a segment of a packet, content before ":" is the name field, and content after ":" is the value field, and no further details are provided herein again.

Because the to-be-compressed packet may further include other content, a sum of the first original content and the second original content may not form the entire to-be-compressed packet. This embodiment does not limit content included in the first original content and in the second original content, which may be set according to an actual requirement, and no further details are provided herein again.

Further, the to-be-compressed packet may further include a body, and the second original content may further include the body.

303: Acquire first compressed content from a static dictionary.

Further, the static dictionary may include but is not limited to: a correspondence between the first original content and the first compressed content.

Specifically, the packet compression apparatus may store the static dictionary. When the to-be-compressed packet sent by the transmitting end is received, the first original content is acquired from the to-be-compressed packet, and then the first compressed content corresponding to the first original content can be acquired from the static dictionary according to an identifier of the first original content.

For example, as shown in FIG. 1, compressing a name field "User-Agent" may include: acquiring, from the static dictionary, compressed content corresponding to the User-Agent, to obtain 2F, in other words, compressing the name field "User-Agent" by using the static dictionary to obtain the code word 2F.

Alternatively, the static dictionary may include a correspondence between the first original content and a corresponding compression method.

Specifically, the compression method corresponding to the first original content may be acquired from the static dictionary according to the identifier of the acquired first original content, and then the first original content is compressed by using the obtained compression method to obtain the first compressed content.

This embodiment does not limit content stored in the static dictionary and a method for compressing the first original content according to the static dictionary, which may be set according to an actual requirement, and no further details are provided herein again.

304: Determine whether a dynamic dictionary includes a correspondence between the second original content and second compressed content; if the correspondence is included, perform step 306; and if the correspondence is not included, perform step 305.

Because the second original content is changeable, the dynamic dictionary may not store content corresponding to changed second original content. Before the second compressed content is acquired by using the dynamic dictionary, it first needs to be determined whether the dynamic dictionary includes the correspondence between the second original content and the second compressed content.

As an implementation manner of this embodiment, the dynamic dictionary may store a compression relationship table, where the compression relationship table stores the correspondence between the second original content and the second compressed content, so that the second compressed content can be acquired from the dynamic dictionary according to an identifier of the second original content.

This embodiment does not limit a method for storing, by the dynamic dictionary, the second original content and the second compressed content, which may be set according to an actual requirement, and no further details are provided herein again.

305: Compress the second original content to obtain the second compressed content and store the correspondence between the second original content and the second compressed content to the dynamic dictionary.

This embodiment does not limit a method for compressing the second original content to obtain the second compressed content, which is a technique well known by a person skilled in the art and may be set according to an actual requirement, for example, the method may be but is not limited to gzip and the like, and no further details are provided herein again.

Perform step 307.

306: Acquire the second compressed content from the dynamic dictionary.

Further, the dynamic dictionary may include but is not limited to: the correspondence between the second original content and the second compressed content.

As an implementation manner of this embodiment compressing the second original content by using the dynamic dictionary may include but is not limited to: compressing a value field "Mozilla/5.0 (X11; U; Linux i686; en-US; rv:1.9.2.8) Gecko/20100723 Ubuntu/10.04 (lucid) Firefox/3.6.8" by using the dynamic dictionary to obtain a code word A45D. Because in the dynamic dictionary, a longer code word is replaced with a shorter code word, a better compression ratio can be obtained.

It should be noted that, step 303 to step 306 respectively are steps used to compress the first original content and the second original content, and an execution sequence is not limited to the execution sequence provided in this embodiment. That is, the execution sequence may further be: compressing the second original content first and then compressing the first original content; or compressing the first original content and the second original content at the same time.

307: Send a compressed packet to a receiving end, so that the receiving end performs a corresponding operation according to the to-be-compressed packet.

Before the receiving end receives a corresponding packet, the compressed packet may be decompressed by using a packet decompression device, and then the corresponding decompressed packet is sent to the receiving end, so that the packet received by the receiving end is the to-be-compressed packet. In this way, the transmission resource is saved by transmitting the compressed packet.

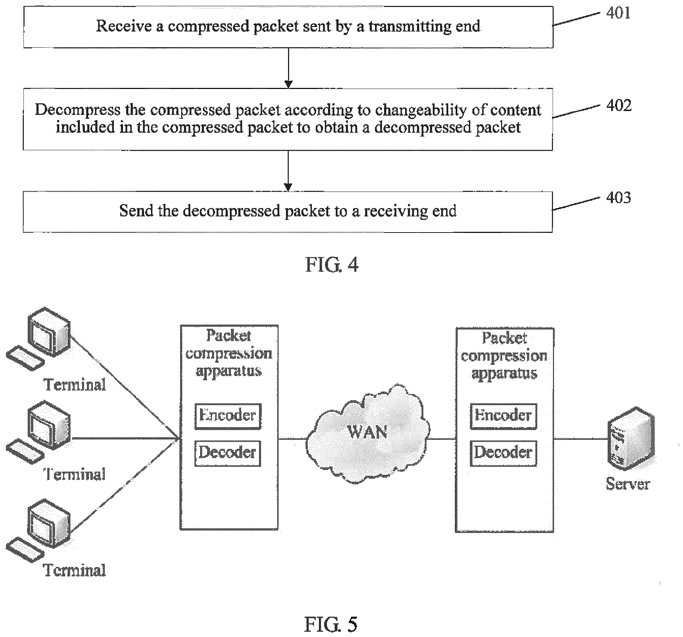

Further, the packet compression apparatus not only may compress the to-be-compressed packet, but also may decompress the compressed packet. The following provides another embodiment, which is mainly used to describe a method for decompressing, by the packet compression apparatus, a compressed packet. As shown in FIG. 4, the method may specifically include:
401: Receive the compressed packet sent by a transmitting end.

402: Decompress the compressed packet according to changeability of content included in the compressed packet to obtain a decompressed packet.

This embodiment does not limit a packet decompression method, which is a technique well known by a person skilled in the art and may be set according to an actual requirement, for example, the packet may be decompressed by using a static dictionary and a dynamic dictionary, and specifically, first original content or second original content corresponding to the compressed packet may be acquired from the dynamic dictionary or the static dictionary, so as to obtain corresponding to-be-compressed content.

403: Send the decompressed packet to the receiving end, so that the receiving end can perform a corresponding operation according to the decompressed packet.

To understand the foregoing embodiment more clearly, the following provides a specific scenario:

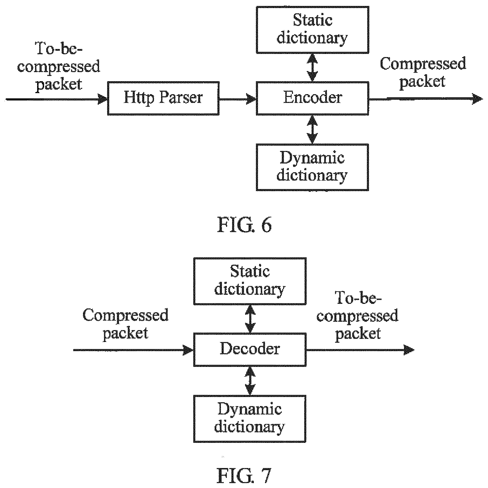

FIG. 5 is a schematic structural diagram of this scenario. Each time a terminal sends a packet to a server, the terminal is a transmitting end and the server is a receiving end; and this scenario may include two packet compression apparatuses, and the packet compression apparatuses may include an encoder and a decoder. As shown in FIG. 6 and FIG. 7, FIG. 6 and FIG. 7 respectively are schematic structural diagrams of the encoder and the decoder. The encoder may be configured to compress a to-be-compressed file, and the decoder may be configured to decompress a compressed file.

Specifically, a working process of compressing the packet by the encoder may include but is not limited to: receiving a to-be-compressed packet and parsing the to-be-compressed packet by using an Http Parser, identifying and acquiring first original content and second original content from the to-be-compressed packet according to the HTTP protocol, for example, identifying and acquiring a name field, a value field, and the like from a Header, and then acquiring, from a static dictionary, first compressed content corresponding to the name field; and determining whether a dynamic dictionary includes a correspondence between the value field and second compressed content, if the correspondence is included, acquiring, from the dynamic dictionary, the second compressed content corresponding to the value field, and if the correspondence is not included, compressing the value field by using gzip to obtain the second compressed content, and storing the correspondence between the second compressed content and the value field to the dynamic dictionary for subsequent querying, use, and the like.

A working process of decompressing the packet by the decoder includes but is not limited to: receiving the compressed packet, identifying and acquiring the first compressed content and the second compressed content from the compressed packet, and then acquiring, from the static dictionary, the first original content corresponding to the first compressed content; and acquiring, from the dynamic dictionary, the second original content corresponding to the second compressed content, so as to obtain the to-be-compressed packet.

It should be noted that, this embodiment is not limited to apply to the foregoing illustrated scenario, and may also be applied to other scenarios, which is not limited or described herein again.

As an implementation manner of this embodiment, data transmission between the terminal and the server is briefly described by using an example in which a user performs registration by using the terminal.

The user enters information such as a user name and a password by using the terminal; the terminal sends a to-be-compressed packet request to the packet compression apparatus on the left side, where the to-be-compressed packet request includes the information such as the user name and the password; the encoder compresses the to-be-compressed packet request according to changeability of the packet request to obtain a compressed packet request; the encoder sends the compressed packet request to the packet compression apparatus on the right side by using a WAN (wide area network), and the decoder decompresses the compressed packet to obtain the to-be-compressed packet, and sends the to-be-compressed packet to the server.

By using the foregoing solution, a to-be-compressed packet sent by a transmitting end is received; the to-be-compressed packet is compressed according to changeability of content included in the to-be-compressed packet, to obtain a compressed packet; and the compressed packet is sent to a receiving end, so that the receiving end performs a corresponding operation according to the to-be-compressed packet. In addition, the compressed packet may further be decompressed. A changeable part and an unchangeable part of the to-be-compressed packet are separately compressed or decompressed in different manners, so that the changeable part and the unchangeable part are better compressed or decompressed, thereby improving the compression ratio. Further, when content of the to-be-compressed packet changes, only changed content is compressed or decompressed again, no compression or decompression needs to be performed on the entire to-be-compressed packet, and compressed content of the unchangeable content can be directly acquired by using a static dictionary, thereby simplifying a compression or decompression process and improving the compression ratio of the to-be-compressed packet, that is, reducing size of a compressed packet.

To clearly represent beneficial effects brought by this embodiment, the following provides some data results of tests that are performed by using the method provided in this embodiment.
1. By using this method, a compression ratio of a Header of a packet is up to 90%.

| Type | Compression Ratio |
|---|---|
| Get Request | 90% |
| Post Request | 88% |

2. By using this method, a compression ratio of an Http response header is 80%.

| Type | Compression Ratio |
|---|---|
| 200 OK | 79% |
| 206 Partial Content | 80% |
| 304 Not Modified | 83% |
| 407 Authentication Required | 86% |

If a Header is directly compressed by using gzip, a compression ratio thereof is below 50%, which is far less than that in our solutions.

The following provides another apparatus embodiment, and this apparatus embodiment is an apparatus embodiment corresponding to the embodiments shown in FIG. 1 to FIG. 4.

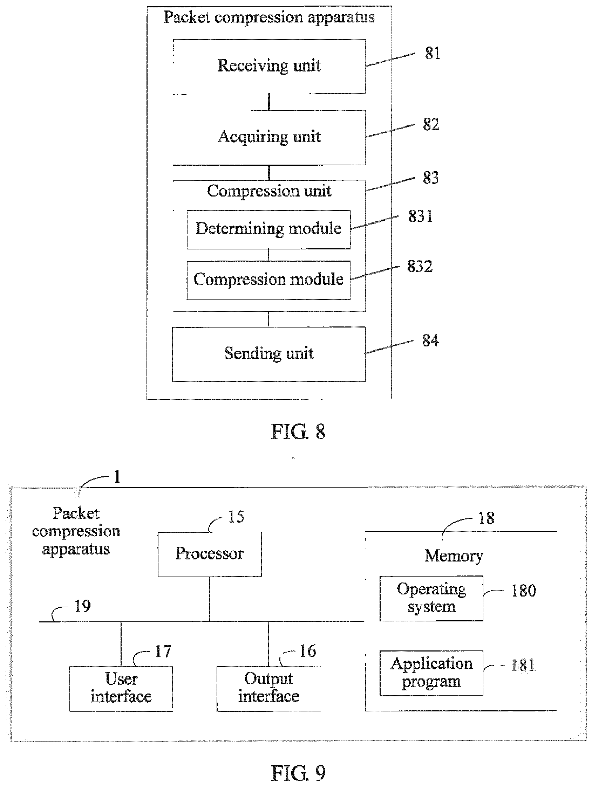

This embodiment provides a packet compression apparatus. As shown in FIG 8, the apparatus may include:
a receiving unit 81, configured to receive a to-be-compressed packet sent by a transmitting end;
an acquiring unit 82, configured to acquire first original content from an unchangeable part of the to-be-compressed packet, and acquire second original content from a changeable part of the to-be-compressed packet;
a compression unit 83, configured to compress the first original content by using a static dictionary to obtain first compressed content, and compress the second original content by using a dynamic dictionary to obtain second compressed content; and
a sending unit 84, configured to send a compressed packet to a receiving end, where the compressed packet includes the first compressed content and the second compressed content.

Further, the static dictionary includes a correspondence between the first original content and the first compressed content;
or,
the static dictionary includes a correspondence between the first original content and a corresponding compression method.

Further, the compression unit 83 includes:
a determining module 831, configured to determine whether the dynamic dictionary includes a correspondence between the second original content and the second compressed content; and
a compression module 832, configured to: if the correspondence is not included, compress the second original content to obtain the second compressed content and store the correspondence between the second original content and the second compressed content to the dynamic dictionary.

Further, the to-be-compressed packet received by the receiving unit 81 includes: a header, where the header includes a name field and a value field corresponding to the name field, the first original content includes content in the name field, and the second original content includes content in the value field corresponding to the name field.

Further, the to-be-compressed packet received by the receiving unit 81 further includes a body, and the second original content further includes the body.

Further, the to-be-compressed packet received by the receiving unit 81 may be a Hypertext Transfer Protocol HTTP packet, a Real-Time Transport Protocol RTP packet, or a Real-Time Streaming Protocol RTSP packet.

In addition, the packet compression apparatus may further include a unit configured to decompress the compressed packet, and a specific implementation manner has been described in the foregoing method embodiments, and no further details are provided herein again.

By using the foregoing solution, a changeable part and an unchangeable part of a to-be-compressed packet are separately compressed in different manners, so that the changeable part and the unchangeable part are better compressed, thereby improving a compression ratio. Further, when content of the to-be-compressed packet changes, only changed content is compressed or decompressed again, no compression or decompression needs to be performed on the entire to-be-compressed packet, and compressed content of the unchangeable content can be directly acquired by using a static dictionary, thereby simplifying a compression or decompression process and improving the compression ratio of the to-be-compressed packet, that is, reducing size of a compressed packet.

The following provides another apparatus embodiment, and this apparatus embodiment is an apparatus embodiment corresponding to the embodiments shown in FIG. 1 to FIG. 4.

As shown in FIG. 9, an embodiment of the present invention provides another packet compression apparatus 1, and the packet compression apparatus 1 includes: at least one processor 15, for example, a CPU, at least one output interface 16 or another user interface 17, a memory 18, and at least one communications bus 19. The communications bus 19 is configured to implement communication between these components. The packet compression apparatus 1 optionally includes another user interface 17, including a display, a keyboard, or a clicking device (for example, a mouse device, a trackball, a touchpad, or a touch display). The memory 18 may include a high-speed RAM (random access memory), or may further include a non-volatile memory, for example, at least one magnetic disk storage. The memory 18 may optionally include at least one storage apparatus located far away from the processor 15.

In some implementation manners, the memory 18 stores the following elements, an executable module or a data structure, or a subset thereof, or an extended set thereof:
an operating system 180, including various system programs, configured to implement various basic services and process a hardware-based task; and
an application program 181, including various application programs, configured to implement various application services.

The application program 181 may include but is not limited to:
a receiving unit, configured to receive a to-be-compressed packet sent by a transmitting end;
an acquiring unit, configured to acquire first original content from an unchangeable part of the to-be-compressed packet, and acquire second original content from a changeable part of the to-be-compressed packet;
a compression unit, configured to compress the first original content by using a static dictionary to obtain first compressed content, and compress the second original content by using a dynamic dictionary to obtain second compressed content; and
a sending unit, configured to send a compressed packet to a receiving end, where the compressed packet includes the first compressed content and the second compressed content.

Further, the static dictionary includes a correspondence between the first original content and the first compressed content;
or,
the static dictionary includes a correspondence between the first original content and a corresponding compression method.

Further, the compression unit includes:
a determining module, configured to determine whether the dynamic dictionary includes a correspondence between the second original content and the second compressed content; and
a compression module, configured to: if the correspondence is not included, compress the second original content to obtain the second compressed content and store the correspondence between the second original content and the second compressed content to the dynamic dictionary.

Further, the to-be-compressed packet received by the receiving unit includes: a header, where the header includes a name field and a value field corresponding to the name field, the first original content includes content in the name field, and the second original content includes content in the value field corresponding to the name field.

Further, the to-be-compressed packet received by the receiving unit further includes a body, and the second original content further includes the body.

Further, the to-be-compressed packet received by the receiving unit may be a Hypertext Transfer Protocol HTTP packet, a Real-Time Transport Protocol RTP packet, or a Real-Time Streaming Protocol RTSP packet.

For specific implementations of modules in the application program 181, refer to corresponding modules in the embodiment shown in FIG. 8, and no further details are provided herein again.

In this embodiment of the present invention, by invoking a program or an instruction stored in the memory 18, the processor 15 is configured to:
receive a to-be-compressed packet sent by a transmitting end;
acquire first original content from an unchangeable part of the to-be-compressed packet, and acquire second original content from a changeable part of the to-be-compressed packet;
compress the first original content by using a static dictionary to obtain first compressed content, and compress the second original content by using a dynamic dictionary to obtain second compressed content; and
send a compressed packet to a receiving end, where the compressed packet includes the first compressed content and the second compressed content.

Further, the static dictionary includes a correspondence between the first original content and the first compressed content;
or,
the static dictionary includes a correspondence between the first original content and a corresponding compression method.

Further, the processor 15 being specifically configured to:
determine whether the dynamic dictionary includes a correspondence between the second original content and the second compressed content; and
if the correspondence is not included, compress the second original content to obtain the second compressed content and store the correspondence between the second original content and the second compressed content to the dynamic dictionary.

Further, the to-be-compressed packet acquired by the processor 15 includes: a header, where the header includes a name field and a value field corresponding to the name field, the first original content includes content in the name field, and the second original content includes content in the value field corresponding to the name field.

Further, the to-be-compressed packet acquired by the processor 15 further includes a body, and the second original content further includes the body.

Further, the to-be-compressed packet acquired by the processor 15 may be a Hypertext Transfer Protocol HTTP packet, a Real-Time Transport Protocol RTP packet, or a Real-Time Streaming Protocol RTSP packet.

By using the foregoing solutions, the packet compression apparatus may compress a changeable part and an unchangeable part of a to-be-compressed packet separately in different manners, so that the changeable part and the unchangeable part are better compressed, thereby improving a compression ratio. Further, when content of the to-be-compressed packet changes, only changed content is compressed or decompressed again, no compression or decompression needs to be performed on the entire to-be-compressed packet, and compressed content of the unchangeable content can be directly acquired by using a static dictionary, thereby simplifying a compression or decompression process and improving the compression ratio of the to-be-compressed packet, that is, reducing size of a compressed packet.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A packet compression method, comprising:
receiving (201) a to-be-compressed packet sent by a transmitting end;
acquiring (202) first original content from an unchangeable part of the to-be-compressed packet wherein the unchangeable part comprises a name field, and acquiring second original content from a changeable part of the to-be-compressed packet wherein the changeable part comprises a value field that corresponds to the name field;
compressing (203) the first original content by using a static dictionary to obtain first compressed content, and compressing the second original content by using a dynamic dictionary to obtain second compressed content; and
sending (204) the compressed packet to a receiving end, wherein the compressed packet comprises the first compressed content and the second compressed content,
wherein the compressing (203) the second original content by using a dynamic dictionary to obtain second compressed content comprises:
determining (304) whether the dynamic dictionary comprises a correspondence between the second original content and the second compressed content; and
upon determining that the correspondence is not comprised, compressing (305) the second original content to obtain the second compressed content and storing the correspondence between the second original content and the second compressed content to the dynamic dictionary.

2. The method according to claim 1, wherein the to-be-compressed packet comprises a header, wherein the header comprises the name field and the value field corresponding to the name field.

3. The method according to claim 2, wherein the to-be-compressed packet further comprises a body, and the second original content further comprises the body.

4. The method according to any one of claims 1 to 3, wherein the to-be-compressed packet is a Hypertext Transfer Protocol HTTP packet, a Real-Time Transport Protocol RTP packet, or a Real-Time Streaming Protocol RTSP packet.

5. A packet compression apparatus, comprising:
a receiving unit (81), configured to receive a to-be-compressed packet sent by a transmitting end;
an acquiring unit (82), configured to acquire first original content from an unchangeable part of the to-be-compressed packet wherein the unchangeable part comprises a name field, and acquire second original content from a changeable part of the to-be-compressed packet wherein the changeable part comprises a value field that corresponds to the name field;
a compression unit (83), configured to compress the first original content by using a static dictionary to obtain first compressed content, and compress the second original content by using a dynamic dictionary to obtain second compressed content; and
a sending unit (84), configured to send the compressed packet to a receiving end, wherein the compressed packet comprises the first compressed content and the second compressed content,
wherein the compression unit comprises:
a determining module (831), configured to determine whether the dynamic dictionary comprises a correspondence between the second original content and the second compressed content; and
a compression module (832), configured to: if the correspondence is not comprised, compress the second original content to obtain the second compressed content and store the correspondence between the second original content and the second compressed content to the dynamic dictionary.

6. The apparatus according to claim 5, wherein the to-be-compressed packet received by the receiving unit (81) comprises a header, wherein the header comprises the name field and the value field corresponding to the name field, the first original content comprises content in the name field.

7. The apparatus according to claim 6, wherein the to-be-compressed packet received by the receiving unit (81) further comprises a body, and the second original content further comprises the body.

8. The apparatus according to any one of claims 5 to 7, wherein the to-be-compressed packet received by the receiving unit is a Hypertext Transfer Protocol HTTP packet, a Real-Time Transport Protocol RTP packet, or a Real-Time Streaming Protocol RTSP packet.

## Patentansprüche

1. Paketkompressionsverfahren, das Folgendes umfasst:
Empfangen (201) eines von einem übertragenden Ende gesendeten, zu komprimierenden Pakets;
Erhalten (202) eines ersten ursprünglichen Inhalts von einem unveränderlichen Teil des zu komprimierenden Pakets, wobei der unveränderliche Teil ein Namensfeld umfasst, und Erhalten eines zweiten ursprünglichen Inhalts von einem veränderlichen Teil des zu komprimierenden Pakets, wobei der veränderliche Teil ein Wertfeld umfasst, das dem Namensfeld entspricht;
Komprimieren (203) des ersten ursprünglichen Inhalts unter Verwendung eines statischen Wörterbuchs zum Erhalten eines ersten komprimierten Inhalts, und Komprimieren des zweiten ursprünglichen Inhalts unter Verwendung eines dynamischen Wörterbuchs zum Erhalten eines zweiten komprimierten Inhalts; und
Senden (204) des komprimierten Pakets an ein empfangendes Ende, wobei das komprimierte Paket den ersten komprimierten Inhalt und den zweiten komprimierten Inhalt umfasst,
wobei das Komprimieren (203) des zweiten ursprünglichen Inhalts unter Verwendung eines dynamischen Wörterbuchs zum Erhalten eines zweiten komprimierten Inhalts Folgendes umfasst:
Bestimmen (304), ob das dynamische Wörterbuch eine Entsprechung zwischen dem zweiten ursprünglichen Inhalt und dem zweiten komprimierten Inhalt enthält; und
bei Bestimmen, dass die Entsprechung nicht enthalten ist, Komprimieren (305) des zweiten ursprünglichen Inhalts zum Erhalten des zweiten komprimierten Inhalts und Speichern der Entsprechung zwischen dem zweiten ursprünglichen Inhalt und dem zweiten komprimierten Inhalt in das dynamische Wörterbuch.

2. Verfahren nach Anspruch 1, wobei das zu komprimierende Paket einen Kopf umfasst, wobei der Kopf das Namensfeld und das Wertfeld entsprechend dem Namensfeld umfasst.

3. Verfahren nach Anspruch 2, wobei das zu komprimierende Paket ferner einen Hauptteil umfasst und der zweite ursprüngliche Inhalt ferner den Hauptteil umfasst.

4. Verfahren nach einem der Ansprüche 1 bis 3, wobei das zu komprimierende Paket ein HTTP-Paket (Hypertext Transfer Protocol), ein RTP-Paket (Real-Time Transport Protocol) oder ein RTSP-Paket (Real-Time Streaming Protocol) ist.

5. Paketkompressionsvorrichtung, die Folgendes umfasst:
eine empfangende Einheit (81), ausgelegt zum Empfangen eines von einem übertragenden Ende gesendeten, zu komprimierenden Pakets;
eine erhaltende Einheit (82), ausgelegt zum Erhalten eines ersten ursprünglichen Inhalts von einem unveränderlichen Teil des zu komprimierenden Pakets, wobei der unveränderliche Teil ein Namensfeld umfasst, und Erhalten eines zweiten ursprünglichen Inhalts von einem veränderlichen Teil des zu komprimierenden Pakets, wobei der veränderliche Teil ein Wertfeld umfasst, das dem Namensfeld entspricht;
eine Kompressionseinheit (83), ausgelegt zum Komprimieren des ersten ursprünglichen Inhalts unter Verwendung eines statischen Wörterbuchs zum Erhalten eines ersten komprimierten Inhalts, und Komprimieren des zweiten ursprünglichen Inhalts unter Verwendung eines dynamischen Wörterbuchs zum Erhalten eines zweiten komprimierten Inhalts; und
eine Sendeeinheit (84), ausgelegt zum Senden des komprimierten Pakets an ein empfangendes Ende, wobei das komprimierte Paket den ersten komprimierten Inhalt und den zweiten komprimierten Inhalt umfasst,
wobei die Kompressionseinheit Folgendes umfasst:
ein Bestimmungsmodul (831), ausgelegt zum Bestimmen, ob das dynamische Wörterbuch eine Entsprechung zwischen dem zweiten ursprünglichen Inhalt und dem zweiten komprimierten Inhalt enthält; und
ein Kompressionsmodul (832) ausgelegt zum: wenn die Entsprechung nicht enthalten ist, Komprimieren des zweiten ursprünglichen Inhalts zum Erhalten des zweiten komprimierten Inhalts und Speichern der Entsprechung zwischen dem zweiten ursprünglichen Inhalt und dem zweiten komprimierten Inhalt in das dynamische Wörterbuch.

6. Vorrichtung nach Anspruch 5, wobei das von der empfangenden Einheit (81) empfangene, zu komprimierende Paket einen Kopf umfasst, wobei der Kopf das Namensfeld und das Wertfeld entsprechend dem Namensfeld umfasst, wobei der erste ursprüngliche Inhalt Inhalt in dem Namensfeld umfasst.

7. Vorrichtung nach Anspruch 6, wobei das von der empfangenden Einheit (81) empfangene, zu komprimierende Paket ferner einen Hauptteil umfasst und der zweite ursprüngliche Inhalt ferner den Hauptteil umfasst.

8. Vorrichtung nach einem der Ansprüche 5 bis 7, wobei das von der empfangenden Einheit empfangene, zu komprimierende Paket ein HTTP-Paket (Hypertext Transfer Protocol), ein RTP-Paket (Real-Time Transport Protocol) oder ein RTSP-Paket (Real-Time Streaming Protocol) ist.

## Revendications

1. Procédé de compression de paquet consistant :
à recevoir (201) un paquet à compresser envoyé par une extrémité de transmission ;
à acquérir (202) un premier contenu original à partir d'une partie non modifiable du paquet à compresser, dans lequel la partie non modifiable comprend un champ nom et à acquérir un second contenu original à partir d'une partie modifiable du paquet à compresser, dans lequel la partie modifiable comprend un champ valeur qui correspond au champ nom ;
à compresser (203) le premier contenu original en utilisant un dictionnaire statique pour obtenir un premier contenu compressé et à compresser le second contenu original en utilisant un dictionnaire dynamique pour obtenir un second contenu compressé ; et
à envoyer (204) le paquet compressé à une extrémité de réception, dans lequel le paquet compressé comprend le premier contenu compressé et le second contenu compressé,
dans lequel la compression (203) du second contenu original en utilisant un dictionnaire dynamique pour obtenir un second contenu compressé consiste :
à déterminer (304) si le dictionnaire dynamique comprend une correspondance entre le second contenu original et le second contenu compressé ; et
lors de la détermination que la correspondance n'est pas incluse, à compresser (305) le second contenu original pour obtenir le second contenu compressé et à stocker la correspondance entre le second contenu original et le second contenu compressé dans le dictionnaire dynamique.

2. Procédé selon la revendication 1, dans lequel le paquet à compresser comprend un en-tête, dans lequel l'en-tête comprend le champ nom et le champ valeur correspondant au champ nom.

3. Procédé selon la revendication 2, dans lequel le paquet à compresser comprend en outre un corps et le second contenu original comprend en outre le corps.

4. Procédé selon l'une quelconque des revendications 1 à 3, dans lequel le paquet à compresser est un paquet de protocole de transfert hypertexte (HTTP), un paquet de protocole de transport en temps réel (RTP) ou un paquet de protocole de diffusion en continu en temps réel (RTSP).

5. Appareil de compression de paquet comprenant :
une unité de réception (81), configurée pour recevoir un paquet à compresser envoyé par une extrémité de transmission ;
une unité d'acquisition (82), configurée pour acquérir un premier contenu original à partir d'une partie non modifiable du paquet à compresser, dans lequel la partie non modifiable comprend un champ nom, et pour acquérir un second contenu original à partir d'une partie modifiable du paquet à compresser, dans lequel la partie modifiable comprend un champ valeur qui correspond au champ nom ;
une unité de compression (83), configurée pour compresser le premier contenu original en utilisant un dictionnaire statique pour obtenir un premier contenu compressé et pour compresser le second contenu original en utilisant un dictionnaire dynamique pour obtenir un second contenu compressé ; et
une unité d'envoi (84), configurée pour envoyer le paquet compressé à une extrémité de réception, dans lequel le paquet compressé comprend le premier contenu compressé et le second contenu compressé,
dans lequel l'unité de compression comprend :
un module de détermination (831), configuré pour déterminer si le dictionnaire dynamique comprend une correspondance entre le second contenu original et le second contenu compressé ; et
un module de compression (832), configuré : si la correspondance n'est pas incluse, pour compresser le second contenu original pour obtenir le second contenu compressé et pour stocker la correspondance entre le second contenu original et le second contenu compressé dans le dictionnaire dynamique.

6. Appareil selon la revendication 5, dans lequel le paquet à compresser reçu par l'unité de réception (81) comprend un en-tête, dans lequel l'en-tête comprend le champ nom et le champ valeur correspondant au champ nom, le premier contenu original comprend un contenu dans le champ nom.

7. Appareil selon la revendication 6, dans lequel le paquet à compresser reçu par l'unité de réception (81) comprend en outre un corps et le second contenu original comprend en outre le corps.

8. Appareil selon l'une quelconque des revendications 5 à 7, dans lequel le paquet à compresser reçu par l'unité de réception est un paquet de protocole de transfert hypertexte (HTTP), un paquet de protocole de transport en temps réel (RTP) ou un paquet de protocole de diffusion en continu en temps réel (RTSP).
